(19) Europäisches Patentamt
European Patent Office
Office européen des brevets

(11) **EP 4 425 799 A1**

(12) **EUROPEAN PATENT APPLICATION**

(43) Date of publication:
**04.09.2024 Bulletin 2024/36**

(51) International Patent Classification (IPC):
**H04B 7/04** [(2017.01)]

(21) Application number: **23305274.5**

(52) Cooperative Patent Classification (CPC):
**H04B 7/04026**

(22) Date of filing: **02.03.2023**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Fondation B Com
35510 Cesson Sevigne (FR)**

(72) Inventors:
• **HASKOU, Abdullah
35250 SAINT AUBIN D'AUBIGNE (FR)**
• **KHALEGHI, Hamidreza
35510 CESSON-SEVIGNE (FR)**

(74) Representative: **Cabinet Beau de Loménie
158, rue de l'Université
75340 Paris Cedex 07 (FR)**

(54) **METHOD AND DEVICE FOR GENERATING A CODEBOOK FOR PRECODING REFLECTING ELEMENTS OF A COMMUNICATION DEVICE**

(57) The invention concerns a method for generating a codebook for precoding reflecting elements positioned on a surface of a communication device (10), the communication device (10) being adapted to reflect a signal between an emitter (20) and a receiver (30). The method comprises: determining a codebook for K receiver's locations, by considering only a communication channel only between the communication device (10) and the receiver; and updating (S200) the generated codebook based on the emitter location.

FIG.1

## Description

Field of the disclosure

The present invention generally relates to the field of telecommunications, and especially to wireless telecommunications implemented by radio networks such as mobile telecommunication networks (ex. 3G, 4G, 5G, etc.), Wi-Fi (Wireless Fidelity), etc. It relates more specifically to a method for generating a codebook for precoding reflecting elements positioned on a surface of a communication device. The invention also relates to a device for generating a codebook.

Description of the Related Art

The previous generations of radio networks were considering the wireless propagation channel as an uncontrollable factor. However, recently, Reconfigurable Intelligent Surfaces (RISs) have received significant attention for their potential to enhance the capacity and coverage of radio networks by smartly reconfiguring the wireless propagation channel.

A RIS may be defined as a relay that receives an incident signal from an emitter and then reradiates it in a specific direction. It is commonly considered as a full-duplex relay.

A RIS comprises a large number of reflecting elements that can dynamically tune the phase of the incident signal to improve the performance of radio networks. In particular, the reflected signals can be combined constructively to improve the strength of the signal received by a receiver. By deploying RISs in a radio network and intelligently reconfiguring their reflections, the wireless propagation channels between the emitter and receiver can be dynamically reconfigured to achieve the desired distributions and gains. This enables the radio network, to some extent, to be controlled, resulting in an improvement in term of reliability, capacity and addressing the issue of wireless channel interference and fading.

A RIS is commonly configured with a codebook-based beamforming technique. This beamforming technique comprises a configuration stage, also known as "beam sweeping" during which the emitter transmits a plurality of beams in a plurality of predetermined directions by applying different configurations of the codebook; identifies the strongest beam that yields the best receiver's performances; and then, establishes a communication link between this emitter and a receiver by using the configuration used to generate the strongest beam. Such technique is for example further detailed in the ETSI contribution RIS(22)TM05010, "TP DGR RIS-003 on Element-Wise RIS Channel Estimation", RIS-TM#05, and in the patent application EP 22 305 947.8.

However, RISs are different from typical antenna arrays since, in operating mode, the reflecting elements of a RIS - sometimes qualified of "passive" reflecting elements - only act as relays of an incident signal received from an emitter at a first position, and transmitted toward a receiver at a second position. The inventors have noticed that current beamforming techniques are not efficient as underestimating the impact of the location of the emitter.

There is thus room for improvement in the fields of wireless telecommunications using RIS, or more generally using a communication device configured for reflecting a radio signal from an emitter toward a receiver.

Summary of the disclosure

To this end, the present invention first provides a computer-implemented method for generating a codebook for precoding reflecting elements positioned on a surface of a communication device, the communication device being adapted to reflect a signal between an emitter and a receiver, the method comprising:

- determining a codebook for K receiver's locations, by considering a communication channel between the communication device and the receiver only; and,

- updating the generated codebook based on the emitter location.

This method offers the advantage of reducing the complexity of designing codebooks adapted for RIS. Furthermore, this method offers the advantage of providing a single "standard" codebook-based RIS method suitable for all deployment scenarios, with an optimal performance in term of received signal power and of signal-to-noise ratio.

In some implementations, the emitter is stationary in relation to the communication device and the receiver is stationary or mobile.

In some implementations, determining the codebook comprises determining phases for forming K beams through K different directions corresponding to the K receiver's locations.

In some implementations, determining the codebook comprises computing Discrete Fourier Transform (DFT) weights associated to the reflecting elements.

In some implementations, updating the codebook comprises:

- determining phase matrix elements $\psi_{m,n}$ of a phase matrix $\psi$ representing a channel from the emitter to the communication device; and,

- updating phases of the generated codebook based on the determined phase matrix elements $\psi_{m,n}$.

In some implementations, each phase matrix element $\psi_{m,n}$ of the matrix $\psi$ is determined by computing

$\psi_{m,n} = -k.d_{tx_{m,n}}$ with $k = \dfrac{2\pi}{\lambda}$ the wavenumber, and $d_{tx_{m,n}}$ the distance between the emitter and the $(m,n)^{th}$ element of the communication device.

In some implementations, the method further comprises obtaining a channel estimation $H_{tx}$ of a channel from the emitter to the communication device; wherein each phase matrix element $\psi_{m,n}$ of the phase matrix $\psi$ representing the channel from the emitter to the communication device is determined so that $\psi_{m,n} = \angle H_{tx_{m,n}}$ with $\angle H_{tx_{m,n}}$ an argument of an estimated channel matrix element $H_{tx_{m,n}}$ of the channel matrix estimation $H_{tx}$.

In some implementations, the codebook is updated when initializing the communication device. Additionally or in a variant, the codebook is dynamically updated after a change of propagation channel between the emitter and the communication device is detected. Additionally or in a variant, the codebook is regularly updated after a predetermined period of time.

In some implementations, the emitter and/or the receiver are compatible with the Standard ETSI TS 123 501.

According to a second aspect, the present invention concerns a method for generating a codebook for precoding reflecting elements positioned on a surface of a communication device, the communication device being adapted to reflect a signal between an emitter and a receiver, the method comprising:

- determining a codebook for K receiver's locations, without considering a communication channel between the emitter and the communication device; and,

- updating the generated codebook based on the emitter location.

According to a third aspect, the present invention concerns a device comprising at least one processor and a memory having stored thereon a program for implementing the method for generating a codebook of the invention.

According to a fourth aspect, the present invention concerns a Reconfigurable Intelligent Surface comprising at least one processor and a memory having stored thereon a program for implementing the method of the invention.

According to a fifth aspect, the present invention concerns a computer-implemented method for controlling a communication device adapted to reflect a signal between an emitter and a receiver, the communication device comprising reflecting elements positioned on a surface of the communication device, the method being implemented by the communication device and comprising:

- obtaining a codebook generated according to the method for generating a codebook previously mentioned; and,

- controlling said communication device with the obtained codebook.

In some implementations, controlling configuring the communication device comprises:

- transmitting a plurality of beams in a plurality of predetermined directions by applying a plurality of configurations of the obtained codebook; and,

- configuring the communication device with a configuration of the obtained codebook that yields a predetermined quality criterion.

In some implementations, data transmission between the emitter and the receiver is compatible with the Standard ETSI TS 123 003.

According to a sixth aspect, the present invention concerns a device comprising at least one processor and a memory having stored thereon a program for implementing the method for controlling a communication device of the invention.

Embodiments of the present invention also extend to programs which, when run on a computer or processor, cause the computer or processor to carry out the methods described above or which, when loaded into a programmable device, cause that device to become the device described above. The program may be provided by itself, or carried by a carrier medium. The carrier medium may be a storage or recording medium, or it may be a transmission medium such as a signal. A program embodying the present invention may be transitory or non-transitory.

Brief description of the drawings

Figure 1 depicts, for illustrative purposes, transmission of signals between an emitter and a receiver of a wireless communication system in which the invention is applicable;

Figure 2 illustrates the impact of the emitter location on the RIS performances. ;

Figure 3 illustrates the impact of the emitter location on the RIS performances, in the horizontal plane $(O,\vec{i},\vec{j})$;

Figure 4 illustrates a particular implementation of a device configured for generating a codebook according to the invention;

Figure 5 illustrates a particular implementation of a device for controlling a communication device according to the invention;

Figure 6 illustrates an example of the hardware architecture of the device of Figure 4;

Figure 7 illustrates an example of the hardware architecture of the device of Figure 5;

Figure 8 is a flowchart of steps of a method for generating a codebook according to the invention; and,

Figure 9 is a flowchart of steps of a method for controlling a communication device according to the invention.

Detailed description

For the purpose of the invention, it is to be understood that the specific devices and processes illustrated in the attached drawings, and described in the following specification, are simply exemplary embodiments or aspects of the disclosed subject matter. Hence, specific dimensions and other physical characteristics related to the embodiments or aspects disclosed herein are not to be considered as limiting unless otherwise indicated.

No aspect, component, element, module, entity, step, function, instruction, and/or the like used herein should be construed as critical or essential unless explicitly described as such. Also, as used herein, the articles "a" and "an" are intended to include one or more items and may be used interchangeably with "one or more" and "at least one". Where only one item is intended, the term "one" or similar language is used. Also, as used herein, the terms "has," "have," "having," or the like are intended to be open-ended terms. Further, the phrase "based on" is intended to mean "based at least partially on" unless explicitly stated otherwise.

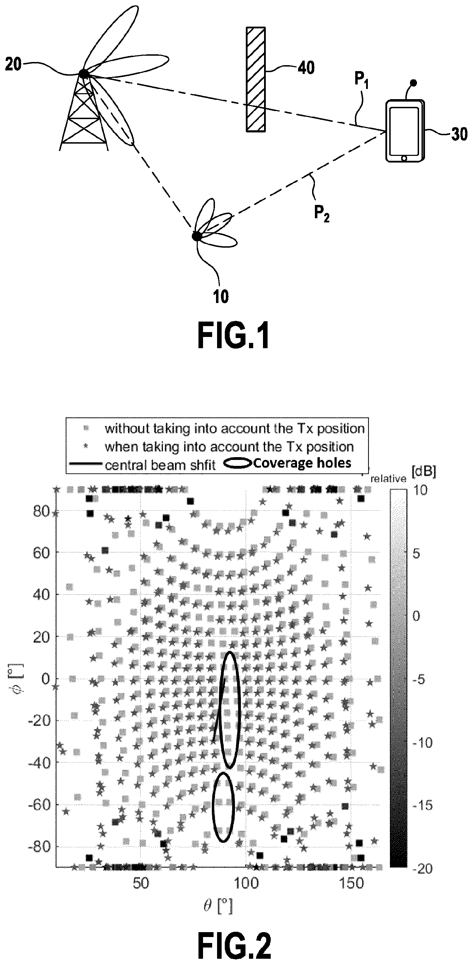

**Figure 1** depicts, for illustrative purposes, transmission of signals between an emitter 20 and a receiver 30 of a wireless communication system in which the invention is applicable.

In general, the wireless communication system for implementing the current invention may include an emitter 20 (mobile or stationary), a communication device 10, and a receiver (mobile or stationary).

As shown in Figure 1, the emitter 20 cannot communicate with the receiver 30 using a direct path P1, due to the presence of an obstacle 40. Therefore, a communication device 10 is set up in the environment of the emitter 20 and of the receiver 30, that acts as a relay between these devices. That communication device 10 is configured to re-radiate a signal and thus, a propagation path P2 is generated between the emitter 20 and the receiver 30. The signal is reradiated by propagating a radiation pattern comprising a main lobe and first-side lobes.

To do so, the communication device comprises a plurality of reflecting elements positioned on a surface of this communication device, and these reflecting elements have (re)configurable reflection characteristics.

In particular implementations, the communication device 10 is a Reconfigurable Intelligent Surfaces (RISs). RISs are also referred to as Intelligent Reflecting Surfaces (IRSs), Large Intelligent Surfaces (LISs) or Software-Controlled Metasurfaces. A typical RIS is a uniform planar array with a large number (e.g., $256 \times 256$) of reflective elements with (re)configurable reflection characteristics. Each reflective element is adapted to passively reflect an incident signal. The RIS of the invention is able to adjust the angle of reflection and the electric field strength. The (re)configurable passive elements can individually steer an incident electro-magnetic wave toward any specific direction by changing their phases and eventually their gains. The RIS does not have to be square, it may be rectangular or have any other shape. Several different shapes such as square, rectangular, hexagonal, circular, etc. may be considered.

Adjusting these elements may allow the reflected signals to be combined constructively to improve the strength of the signal received by a receiver 30.

The person skilled in the art can consult the following articles to obtain further details on the Reconfigurable Intelligent Surfaces (RISs): "Antenna Theory Analysis and Design", C. A. Balanis, 3rd edition, Wiley-Interscience, 2005 ; "Reconfigurable Intelligent Surface-Aided Wireless Communications: Adaptive Beamforming and Experimental Validations", M. M. Amri & Al., IEEE Access, vol. 9, pp. 147442-147457, 2021 ; and, "Reconfigurable Intelligent Surfaces: A signal processing perspective with wireless applications," E. Björnson & Al., in IEEE Signal Processing Magazine, vol. 39, no. 2, pp. 135-158, March 2022.

In one example, this communication device is deployed on walls, ceiling, and furniture of an indoor environment, so as to enhance coverage. In a variant, it can be placed on high-speed vehicles, unmanned aerial vehicles (e.g., drones) or on buildings to achieve high spectral efficiency.

The receiver 30 is illustrated in Figure 1 as a user equipment (UE) i.e., a device used by an end-user to communicate. In one example, that user equipment is a smartphone or a laptop computer equipped with a mobile broadband adapter. However, the present disclosure is not limited thereto and, in general, the receiver 30 may be any other wireless infrastructure entity.

Figure 1 also illustrates the radiation of three beams of the emitter 20, i.e., using precoding as further detailed below.

The emitter 20 is illustrated in Figure 1 as a base station, i.e., a piece of equipment that facilitates wireless communication between the user equipment and a network. A base station is also referred to as "the node B" in 3G networks (the third-generation technology standard for broadband cellular networks), "eNodeB" for the LTE standard, and "gNodeB" for 5G (the fifth-generation technology standard for broadband cellular networks).

However, the emitter 20 may also be an access point (AP) of a local area network (LAN), such wireless LAN, e.g. according to IEEE 802.11 standards. The embodiments presented herein may be readily employed in systems such as 3GPP NR or IEEE 802.11be ("Wi-Fi 7") or other emerging systems. Another possibility is to employ the present disclosure to any communication between two devices in device to device communication, without presence of or connection to some network infrastructure.

The invention remains applicable whatever the nature of the radio network considered, in particular for a mobile telecommunication network implementing GSM, 3G (third generation of wireless mobile telecommunications technology), 4G (fourth generation of wireless mobile telecommunications technology), 5G (fifth generation of wireless mobile telecommunications technology), and/or B5G (acronym of Beyond 5G). The invention remains also applicable with a Wi-Fi (acronym of Wireless Fidelity) network, a WiMAX (acronym of Worldwide Interoperability for Microwave Access) network, a Satellite Internet Access network, etc. In addition, no limitation is attached to the kind of data that may be shared over this radio network.

In an implementation, the emitter and/or the receiver are compatible with the Standard ETSI TS 123 501 (the current version being the version 17.7.0, published in January 2023 and also referenced as "3GPP TS 23.501 version 17.7.0 Release 17") and/or data transmission between the emitter 20 and the receiver 10 is compatible with the Standard ETSI TS 123 003 (the current version being the version 17.8.0, published in January 2023 and also referenced as "3GPP TS 23.003 version 17.8.0 Release 17"). In a variant, the invention applies to technologies beyond the fifth generation (B5G).

In an alternative, the emitter 20 is a Wi-Fi Access Point, and the receiver 30 is a Wi-Fi equipment.

The relative locations of the emitter 20, of the receiver 30 and of the relay device 10 may be identified using geographic coordinates, for example in a Cartesian coordinate system or in a spherical coordinate system.

**Figure 2** illustrates the impact of the emitter location on the RIS performances. These results were obtained by considering the received power level on a sphere that has a radius larger than the inner radius of the far-field region and centered at the RIS center.

Let us consider a reference frame defined by $(O,\vec{i},\vec{j},\vec{k})$, with O is a particular point in space and $\vec{i},\vec{j},\vec{k}$ three unit normal vectors defining the metric properties of the space, a RIS 10 in the $(O,\vec{j},\vec{k})$ plan, and an emitter 20 and a receiver 30 both in the $(O,\vec{i},\vec{j},)$ plan.

This RIS comprises 21 × 21 elements and is designed for 3.75GHz 5G's band with an interelement distance of half a wavelength. In a spherical coordinate system $(r,\theta,\emptyset)$, the position of a point is specified by three numbers: the radial distance (r), the polar angle ($\theta$), and the azimuth angle ($\emptyset$).

In a first example illustrated by squares, the emitter location is not considered. In that example, the RIS is centered at (0m,0°,0°). A codebook was designed without taking into account the emitter location, i.e., by considering a signal directly injected in the different RIS elements of the RIS, as it would be the case in the antenna arrays domain. The codebook was designed with a Discrete Fourier Transform (DFT)-based method for the experimentation, but the inventors observed that similar conclusions can be drawn when other beamforming methods are considered.

Squares of this Figure 2 represent the obtained beam directions $\theta,\emptyset$ (in degrees) and grey levels of that squares represent their power relatively to a maximum received power (in dB). It can be observed that the distribution of squares is rather uniform, and that the relative power is around 0 dB.

In a second example illustrated by stars, the emitter location is now considered. In that example, the RIS is centered at (0m,0°,0°) and the emitter at (2m, 90°, 30°). Stars of this Figure 2 represent the obtained beam directions $\theta,\emptyset$ and grey levels of that stars represent their power relatively to the maximum received power in the configuration of the first example. It can be observed that the obtained beams are shifted (when observing location of a given square and the corresponding star). Moreover, due to the different beams deformation, the maximum relative power (relative to the maximum power received in the first example) is reduced by around 9dB. Finally, due to the different beams shift, some coverage holes - that do not comprise stars - and represented by an oval shape in Figure 2 appeared in that second example.

Therefore, this Figure 2 illustrates that if the emitter location is not considered for configuring the RIS with a codebook, this leads to an uncertainty (illustrated by a shift) on the directions $\theta,\emptyset$ of the reflected beams. Furthermore, the use of such a RIS does not allow a complete coverage of space, and some coverage holes appear. Finally, the moving of the emitter may lead to a significant degradation in the power level received by the receiver.

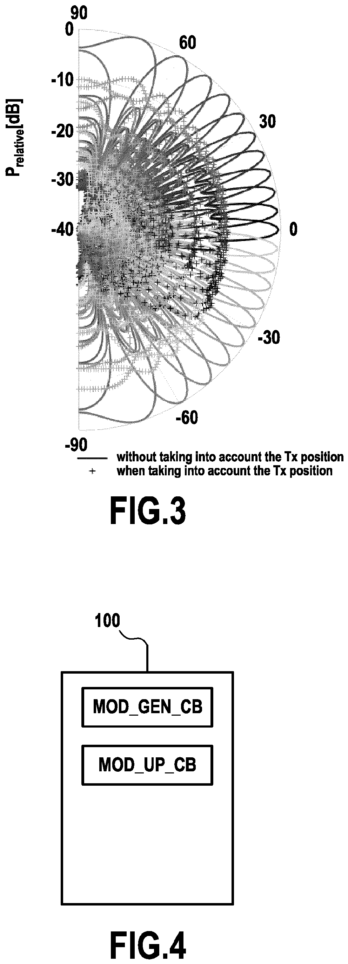

**Figure 3** illustrates the impact of the emitter location on the RIS performances, in the horizontal plane $(O,\vec{i},\vec{j})$. These results were obtained by considering the received power level on a circle that has a radius larger than the inner radius of the far-field region and centered at the RIS center.

The first example previously mentioned and in which the emitter location is not considered is illustrated by straight lines in that plane $(O,\vec{i},\vec{j})$. It can be observed that the distribution is rather uniform and covers the entire horizontal plane. Furthermore, it can be observed that except of extremal beams, the Half Power Beamwidth is rather weak (e.g., around 5.5°). For the record, the Half Power Beamwidth is defined as the angle at which the power reduces by 3dB from its maximum value, on both sides of the maximum value, in the $(O,\vec{i},\vec{j},)$ plane.

The second example previously mentioned and in which the emitter location is now considered is illustrated by the lines composed of crosses in that plane $(O, \vec{i}, \vec{j})$. It can be observed that the distribution does not cover the entire horizontal plan, and that the maximum relative power (relative to the maximum power received in the first example) is reduced by around 9dB. Furthermore, this Figure illustrates that when the emitter location is considered, sidelobes appear.

For the records, in a radio antenna's radiation pattern, the main lobe is typically defined as the lobe containing the higher power, e.g., the lobe exhibiting the greater field strength, and the other lobes are called "side-lobes". Side-lobes usually represent unwanted radiation in undesired directions, since side-lobe radiation wastes energy and may cause interference to other receivers. Another disadvantage is that side-lobes may reduce the quality of the signal received by the targeted receiver, and thus reduce coverage area and spectral efficiency.

Therefore, this Figure 3 also illustrates that if the emitter location is not considered for configuring the RIS, a complete coverage of space will not be possible, and the moving of the emitter will lead to a significant degradation in the power level received by the receiver.

**Figure 4** illustrates a particular implementation of a device 100 configured for generating a codebook according to the invention.

The device 100 for generating a codebook may be the communication device itself, or a separated device.

As illustrated by Figure 4, the device 100 for generating a codebook according to the invention comprises:

- a module MOD_GEN_CB configured for determining a codebook for K receiver's locations, by considering a communication channel between the communication device 10 and the receiver 30 only, and,

- a module MOD_UP CB configured for updating the generated codebook based on the emitter location.

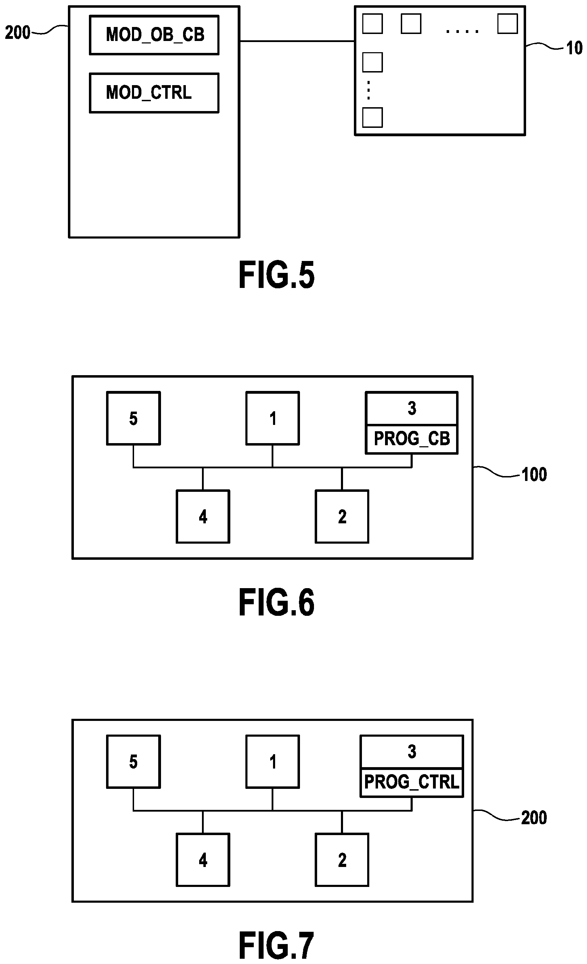

**Figure 5** illustrates a particular implementation of a device 200 configured for controlling a communication device 10 according to the invention.

This device 200 for controlling a communication device may be the communication device itself, or a separated control device connected to the communication device. As illustrated by Figure 5, the device 200 for controlling a communication device according to the invention comprises:

- a module MOD_OB_CB configured for obtaining a codebook generated according to the method for generating a codebook previously mentioned ;

- a module MOD_CTRL for controlling the communication device 10 with the obtained codebook.

In particular implementations, the module MOD_OB_CB configured for obtaining a codebook comprises the module MOD_GEN_CB configured for determining a codebook and the module MOD_UP CB configured for updating the generated codebook as submodules.

**Figure 6** illustrates an example of the hardware architecture of the device 100 configured for generating a codebook of Figure 4.

To this end, the device 100 has the hardware architecture of a computer. As shown in Figure 6, the device comprises a processor 1. Although illustrated as a single processor 1, two or more processors can be used according to particular needs, desires, or particular implementations of the device. Generally, the processor 1 executes instructions and manipulates data to perform the operations of the device and any algorithms, methods, functions, processes, flows, and procedures as described in the present disclosure.

The device 100 may also comprise communication means 5. Although illustrated as a single communication means 5 in Figure 6, two or more communication means can be used according to particular needs, desires, or particular implementations of the device. The communication means may be used by the device for communicating with another electronic device that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated device 100.

The device also comprises a random access memory 2, a read-only memory 3, and a non-volatile memory 4. The read-only memory 3 of the device constitutes a recording medium conforming to the invention, which is readable by processor 1 and on which is recorded a computer program PROG_CB conforming to the invention, containing instructions for carrying out the steps of the method for generating a codebook according to the invention.

The program PROG_CB defines functional modules of the device 100, which are based on or control the aforementioned elements 1 to 5 of the device 100, and which comprise in particular:

- the module MOD_GEN_CB configured for determining a codebook for K receiver's locations, by considering a communication channel between the communication device 10 and the receiver 30 only, and,

- the module MOD_UP CB configured for updating the generated codebook based on the emitter location.

**Figure 7** illustrates an example of the hardware architecture of the device 200 configured for controlling a communication device of Figure 5.

To this end, the device 200 has the hardware architecture of a computer. As shown in Figure 7, the device 200 comprises a processor 1. Although illustrated as a single processor 1, two or more processors can be used according to particular needs, desires, or particular implementations of the device. Generally, the processor 1 executes instructions and manipulates data to perform the operations of the device and any algorithms, methods, functions, processes, flows, and procedures as described in the present disclosure.

The device 200 may also comprise communication means 5, in particular when this device is distinct from the communication device 10. Although illustrated as a single communication means 5 in Figure 7, two or more communication means can be used according to particular needs, desires, or particular implementations of the device. The communication means may be used by the device 200 for communicating with another electronic device that is communicatively linked to a radio network in a distributed environment. Generally, the communication means 5 are operable to communicate with the radio network and comprise logic encoded in software, hardware, or a combination of software and hardware. More specifically, the communication means 5 can comprise software supporting one or more communication protocols associated with communications such that the radio network or interface's hardware is operable to communicate physical signals within and outside of the illustrated device 200.

The device 200 also comprises a random access memory 2, a read-only memory 3, and a non-volatile memory 4. The read-only memory 3 of the device constitutes a recording medium conforming to the invention, which is readable by processor 1 and on which is recorded a computer program PROG_CTRL conforming to the invention, containing instructions for carrying out the steps of the method for controlling a communication device according to the invention.

The program PROG_CTRL defines functional modules of the device, which are based on or control the aforementioned elements 1 to 5 of the device 200, and which comprise in particular:

- the module MOD_OB_CB configured for obtaining a codebook generated according to the method for generating a codebook previously mentioned; and,

- the module MOD_CTRL for controlling the communication device 10 with the obtained codebook.

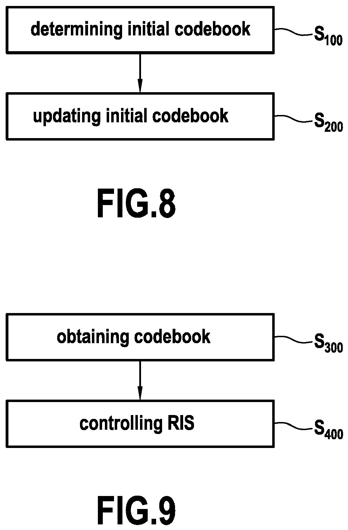

**Figure 8** is a flowchart of steps of a method for generating a codebook according to the invention.

In the following, we are only considering the case where the emitter 20 is stationary (with respect to the communication device 10), and the receiver 30 is stationary or mobile, e.g., its location is not known in advance. This configuration is particularly adapted when the emitter 20 corresponds to a base station, and the receiver 30 to a user equipment.

Step S100

As shown on Figure 8, the method for generating a codebook comprises a first step S100 of determining a codebook for K receiver's locations, by considering the communication channel between the communication device 10 and the receiver 30 only. This step may be implemented by the module MOD_GEN_CB of the device 100.

In other words, in that step S100, a codebook is determined without considering the portion of the communication channel between the emitter 20 and the communication device 10.

In particular implementations, this step is implemented by considering that the signal is "injected" in the communication device 10, with different phases for the different reflecting elements of the communication device 10. In that case, during this step, the communication device 10 can be configured similarly to an array antenna. Each reflecting element, - or in a variant a group of elements - is then driven by a controlling module which controls the phase and eventually the amplitude of the corresponding reflecting element.

To that end, the phases required for forming beams in the far-field at different angles corresponding to different possible locations of the receiver are determined.

These phases may be determined as follows. Let us consider a system comprising an emitter 20, a receiver 30, and a RIS 10 composed of $M \times N$ reflective elements where M and N correspond respectively to the number of RIS columns and rows. Let $\varphi_{m,n}$ be the phase of the signal s(t) "injected" in the reflecting element (m,n).

Then the received signal $s_{rx}$ (e.g., received by the receiver 30) is given by:

$$s_{rx} = \sum_{m=1}^{M} \sum_{n=1}^{N} s_{rx_{m,n}}$$

where $s_{rx_{m,n}}$ denotes the received signal transmitted by the reflecting element $(m,n)$.

Using a free-pace propagation model and ignoring the additive noise, the received signal can be given by:

$$s_{rx} = \frac{s\lambda}{4\pi} \sum_{m=1}^{M} \sum_{n=1}^{N} \frac{1}{d_{rx_{m,n}}} e^{j\left(\varphi_{m,n} - k d_{rx_{m,n}}\right)}$$

where $\lambda$ denotes the free-space wavelength, $k = \frac{2\pi}{\lambda}$ the wave number, and $d_{rx_{m,n}}$ a distance between the reflecting element (m,n) (for example its center) and the receiver 30.

To maximize the total received signal, the received signal from all the RIS elements should have the same phase $\varphi_0$. Hence,

$$\varphi_{m,n} - k d_{rx_{m,n}} = \varphi_0 \rightarrow \varphi_{m,n} = \varphi_0 + k d_{rx_{m,n}}$$

By setting $\varphi_0 = 0$, the required phase of the reflecting element $(m, n)$ is given by:

$$\varphi_{m,n} = k d_{rx_{m,n}}$$

Particular implementation #1

Therefore, a codebook that generates beams in desired directions can be designed by changing the angular position of the receiver 30 to the desired directions, while keeping the same distance from the RIS center $d_{rx}$. This codebook C is expressed as

$$C = \begin{bmatrix} \varphi_1, & \varphi_2, & \varphi_3, & \dots \varphi_Q \end{bmatrix}$$

where $\varphi_q = vec(\emptyset_q)$ is a vectorized representation of the required phase matrix for obtaining the $q^{th}$ beam ($\emptyset_q$). This later matrix is given by:

$$\emptyset_q = \begin{bmatrix} k d^q_{rx_{1,1}} & \dots & k d^q_{rx_{1,M}} \\ \vdots & \ddots & \vdots \\ k d^q_{rx_{N,1}} & \dots & k d^q_{rx_{N,M}} \end{bmatrix}$$

where $d^q_{rx_{m,n}}$ is the distance from the $(m,n)^{th}$ reflecting element to the receiver at the $q^{th}$ position (for generating the $q^{th}$ beam).

Particular implementation #2

In a variant, determining the codebook comprises computing Discrete Fourier Transform (DFT) weights associated to the reflecting elements of the communication device. In that case, the controlling device 100 can reconfigure the communication device 10 by applying different precoding weights to the reflecting elements, such that the beam direction is modified.

The codebook may be formed by the DFT matrix as expressed below :

$$W = \frac{1}{\sqrt{L}} \begin{bmatrix} 1 & 1 & 1 & \cdots & 1 \\ 1 & \omega & \omega^2 & \cdots & \omega^{L-1} \\ 1 & \omega^2 & \omega^4 & \cdots & \omega^{2(L-1)} \\ \vdots & \vdots & \vdots & \ddots & \vdots \\ 1 & \omega^{L-1} & \omega^{2(L-1)} & \cdots & \omega^{(L-1)(L-1)} \end{bmatrix}$$

where $\omega = e^{\frac{-2\pi j}{L}}$ and $L = M \times N$ is the total number of reflecting elements.

This codebook comprises a plurality of different configurations that may be applied on the reflecting elements of the communication device.

In one example, each line (of size $L$, with $L = M \times N$) corresponds to a given configuration, that can be re-organized into a $M \times N$ matrix, each (m,n) element of that $M \times N$ matrix corresponding to the (m,n) reflecting element of the communication device 10. In other words, the DFT matrix provides a number of configurations equal to the number of reflecting elements.

Finally, and as illustrated by the DFT matrix above, each configuration corresponds to a set of phases to apply on reflecting elements of the communication device 10.

The person skilled in the art can consult the following article to obtain further details on computing Discrete Fourier Transform weights: "Reconfigurable Intelligent Surface-Aided Wireless Communications: Adaptive Beamforming and Experimental Validations", M. Amri, N. M. Tran, and K. W. Choi, IEEE Access, vol. 9, pp. 147442-147457, 2021.

In a variant, rather than applying a DFT-based approach, a codebook could be generated using Grassmannian codebook, or Random Vector Quantization (RVQ) codebook, or Lloyd codebook. The person skilled in the art can consult the following article to obtain further details on performance of different codebooks: "Comparison of codebooks for beamforming in limited feedback MIMO systems," Y. T. Wu, Y. Y. Zhao, and F. Yu, in Proceedings of the . Int. Conf. On Computer Science and Automation Engineering (CSAE), pp. 32-36, IEEE, Zhangjiajie, China, May 2012.

Step S200

The method for generating a codebook then comprises a step S200 of updating the generated codebook based on the emitter location. This step may be implemented by the module MOD_UP_CB of the device 100.

This step S200 may be implemented by:

- determining phase matrix elements $\psi_{m,n}$ of the phase matrix $\psi$ representative of the communication channel between the emitter 20 and the communication device 10, and,

- updating phases of the generated codebook based on the determined phase matrix elements $\psi_{m,n}$.

In one example, the codebook may be updated in when initializing the device 10. Additionally the codebook may be dynamically updated when a change of the propagation BS- channel between the emitter 20 and the communication device 10 is detected. In a variant, the codebook is updated after a predetermined period of time.

If the communication device and the emitter locations are relatively fixed, the channel may be considered as quasi-static, and so the codebook may be updated once in a long time. For illustrative purpose, the codebook may be updated every 1 hour or more.

In particular implementations, the phase $\psi_{m,n}$ of the reflecting element $(m, n)$ is determined as follows:

$$\psi_{m,n} = -k d_{tx_{m,n}}$$

where $d_{tx_{m,n}}$ corresponds to the distance between the emitter 20 and the reflecting element (m,n) of the device 10.

The codebook phases are then updated so that

$$\varphi'_{m,n} = \varphi_{m,n} - \psi_{m,n}$$

where $\varphi'_{m,n}$ corresponds to the updated phase of the reflecting element (m,n), and $\varphi_{m,n}$ corresponds to the phase of the reflecting element $(m, n)$ computed at step S100.

Regarding the particular implementation #1, a new codebook $C' = [\varphi_1', \varphi_2', \varphi_3', \dots \varphi_Q']$ is then generated using the updated phases. Regarding the particular implementation #2, an initial phase $\varphi_{m,n}$ is obtained from the DFT matrix $W$, and an updated phase is computed by subtracting the phase shift $\psi_{m,n}$ from that initial phase $\varphi_{m,n}$.

In a variant, the phase $\psi_{m,n}$ of the reflecting element $(m, n)$ is determined as follows. First, a channel estimation $H_{tx}$ of the channel from the emitter 20 to the communication device is obtained. This channel estimation $H_{tx}$ may be determined by the device 100 or by the communication device itself.

The person skilled in the art can consult the following article for further details concerning channel estimation: "An Optimal Channel Estimation Scheme for Intelligent Reflecting Surfaces Based on a Minimum Variance Unbiased Estimator", T. L. Jensen, and E. De Carvalho, IEEE International Conference on Acoustics, Speech and Signal Processing (ICASSP), pp. 5000-5004, Barcelona, Spain, 2020.

Finally, each phase matrix element $\psi_{m,n}$ of the phase matrix $\psi$ representing the channel from the emitter 20 to the communication device 10 is determined so that $\psi_{m,n} = \angle H_{tx_{m,n}}$ with $\angle H_{tx_{m,n}}$ an argument of an estimated channel element $H_{tx_{m,n}}$ of the channel estimation matrix $H_{tx}$.

**Figure 9** is a flowchart of steps of a method for controlling a communication device according to the invention.

As shown on Figure 9, the method for controlling a communication device comprises a first step S300 of obtaining a codebook generated according to the method for generating a codebook previously mentioned. This step is implemented by the module MOD_OB_CB of the device 200.

In particular implementations, "obtaining a codebook" comprises applying, by this device 200, the method for generating a codebook previously described.

In a variant, the device 100 implements the method for generating a codebook previously described. And the step of "obtaining a codebook" then comprises "receiving, by the device 200 for controlling a communication device, a codebook generated by the device 100 according to the method for generating a codebook". In that case, the device 100 and the device 200 may be connected using a wired or wireless connection, via a radio network.

The method for controlling a communication device then comprises a step S400 of controlling said communication device with the obtained codebook. This step is implemented by the module MOD_CTRL of the device 200.

In particular implementations, this step S400 comprises:

- transmitting a plurality of beams in a plurality of predetermined directions by applying a plurality of configurations of the obtained codebook; and,

- selecting a configuration of the obtained codebook that yields a predetermined criterion; and,

- controlling the communication device 10 by applying the selected configuration.

In one example, that predetermined criterion is an operating criterion, such as a quality criterion of the data transmission (maximization of the bitrate or of the power received by the receiver 30, absence of interference between temporal symbols at the receiver-side, etc.), or a network spectral efficiency criterion taking into account the interferences induced on other users, or even a network energy efficiency criterion.

## Claims

1. A method for generating a codebook for precoding reflecting elements positioned on a surface of a communication device (10), the communication device (10) being adapted to reflect a signal between an emitter (20) and a receiver (30), the method comprising:

    - determining (S100) a codebook for K receiver's locations, by considering a communication channel between the communication device (10) and the receiver only; and,
- updating (S200) the generated codebook based on the emitter location.

2. The method of Claim 1, wherein the emitter is stationary and the receiver is mobile or stationary.

3. The method of Claim 1 or 2, wherein determining (S100) the codebook comprises determining phases for forming K beams through K different directions corresponding to the K receiver's locations.

4. The method of one of Claims 1 to 3, wherein determining (S100) the codebook comprises computing Discrete Fourier transform (DFT) weights associated to the reflecting elements.

5. The method of one of Claims 1 to 4, wherein updating (S200) the codebook comprises:

   - determining phase matrix elements $\psi_{m,n}$ of a phase matrix $\psi$ representing a channel from the emitter (20) to the communication device (10); and,
   - updating phases of the generated codebook based on the determined phase matrix elements $\psi_{m,n}$.

6. The method of Claim 5, wherein each phase matrix element $\psi_{m,n}$ of the matrix $\psi$ is determined by computing $\psi_{m,n} = -k.d_{tx_{m,n}}$ with $k = \dfrac{2\pi}{\lambda}$ the wavenumber, and $d_{tx_{m,n}}$ the distance between the emitter (20) and the $(m,n)^{th}$ element of the communication device (10).

7. The method of Claim 5, further comprising obtaining a channel estimation ($H_{tx}$

8. of a channel from the emitter (20) to the communication device (10); wherein each phase matrix element $\psi_{m,n}$ of the phase matrix $\psi$ representing the channel from the emitter (20) to the communication device (10) is determined so that $\psi_{m,n} = \angle H_{tx_{m,n}}$ with $\angle H_{tx_{m,n}}$ an argument of an estimated channel matrix element $H_{tx_{m,n}}$ of the channel matrix estimation $H_{tx}$.

9. The method of one of Claims 1 to 7, wherein the codebook is dynamically updated after a change of propagation channel between the emitter (20) and the communication device (10) is detected.

10. The method of one of Claims 1 to 8, wherein the emitter (20) and/or the receiver (30) are compatible with the Standard ETSI TS 123 501.

11. A computer program (PROG_CB) which on execution by a device causes the device to execute a method for generating a codebook, according to Claims 1 to 9.

12. A non-transitory computer-readable medium storing a program (PROG_CB) which, when executed by a microprocessor or computer system, causes the microprocessor or computer system to perform a method for generating a codebook, according to Claims 1 to 9.

13. A device (100) comprising at least one processor and a memory having stored thereon a program (PROG_CB) for implementing the method according to any of Claims 1 to 9.

**FIG.1**

Legend:
- ■ without taking into account the Tx position
- ★ when taking into account the Tx position
- —— central beam shfit ⬭ Coverage holes

relative [dB]

**FIG.2**

without taking into account the Tx position
+ when taking into account the Tx position

# FIG.3

# FIG.4

**FIG.5**

**FIG.6**

**FIG.7**

determining initial codebook — S_100

↓

updating initial codebook — S_200

# FIG.8

obtaining codebook — S_300

↓

controlling RIS — S_400

# FIG.9

Europäisches
Patentamt

European
Patent Office

Office européen
des brevets

## EUROPEAN SEARCH REPORT

Application Number

EP 23 30 5274

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/407222 A1 (ZHU QIPING [US] ET AL) 22 December 2022 (2022-12-22) * paragraph [0062] – paragraph [0086]; figures 1-7,12,15 * ----- | 1-12 | INV. H04B7/04 |
| A,D | EP 3 962 006 A1 (VESTEL ELEKTRONIK SANAYI VE TICARET AS [TR]) 2 March 2022 (2022-03-02) * paragraphs [0025] – [0040]; figure 1 * ----- | 1-12 | |

|  | TECHNICAL FIELDS SEARCHED (IPC) |
|---|---|
|  | H04B |

The present search report has been drawn up for all claims

| Place of search | Date of completion of the search | Examiner |
|---|---|---|
| Munich | 12 July 2023 | Bauer, Frédéric |

EPO FORM 1503 03.82 (P04C01)

## ANNEX TO THE EUROPEAN SEARCH REPORT
## ON EUROPEAN PATENT APPLICATION NO.

EP 23 30 5274

This annex lists the patent family members relating to the patent documents cited in the above-mentioned European search report.
The members are as contained in the European Patent Office EDP file on
The European Patent Office is in no way liable for these particulars which are merely given for the purpose of information.

12-07-2023

| Patent document cited in search report | | Publication date | Patent family member(s) | | Publication date |
|---|---|---|---|---|---|
| US 2022407222 | A1 | 22-12-2022 | US 2022407222 | A1 | 22-12-2022 |
| | | | WO 2022263428 | A1 | 22-12-2022 |
| EP 3962006 | A1 | 02-03-2022 | CN 116057852 | A | 02-05-2023 |
| | | | EP 3962006 | A1 | 02-03-2022 |
| | | | KR 20230058512 | A | 03-05-2023 |
| | | | WO 2022049112 | A1 | 10-03-2022 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 22305947 A

**Non-patent literature cited in the description**

- Antenna Theory Analysis and Design. **C. A. BAL-ANIS.** Reconfigurable Intelligent Surfaces (RISs). Wiley-Interscience, 2005
- **M. M. AMRI.** Reconfigurable Intelligent Surface-Aided Wireless Communications: Adaptive Beamforming and Experimental Validations. *IEEE Access,* 2021, vol. 9, 147442-147457
- **E. BJÖRNSON.** Reconfigurable Intelligent Surfaces: A signal processing perspective with wireless applications. *IEEE Signal Processing Magazine,* March 2022, vol. 39 (2), 135-158
- **M. AMRI ; N. M. TRAN ; K. W. CHOI.** Reconfigurable Intelligent Surface-Aided Wireless Communications: Adaptive Beamforming and Experimental Validations. *IEEE Access,* 2021, vol. 9, 147442-147457
- Comparison of codebooks for beamforming in limited feedback MIMO systems. **Y. T. WU ; Y. Y. ZHAO ; F. YU.** Proceedings of the . Int. Conf. On Computer Science and Automation Engineering (CSAE). IEEE, May 2012, 32-36
- **T. L. JENSEN ; E. DE CARVALHO.** An Optimal Channel Estimation Scheme for Intelligent Reflecting Surfaces Based on a Minimum Variance Unbiased Estimator. *IEEE International Conference on Acoustics, Speech and Signal Processing (ICASSP),* 2020, 5000-5004